# EUROPÄISCHE PATENTSCHRIFT

(11) **EP 0 531 720 B1**
(45) Veröffentlichungstag und Bekanntmachung des Hinweises auf die Patenterteilung: **17.05.1995**
(21) Anmeldenummer: 92113541.4
(22) Anmeldetag: 08.08.1992
(51) Int. Cl.: B62D 35/00, B60R 13/04

(54) **Befestigungssystem für sichtbare Anbauteile bei Fahrzeugen, insbesondere Kraftfahrzeugen**
Mounting system for visible assembling elements of vehicles, particularly automotive vehicles
Système de fixation pour des éléments de montage visibles pour véhicules, en particulier véhicules automobiles

(30) Priorität: 07.09.1991 DE 4129776
(43) Veröffentlichungstag der Anmeldung: 17.03.1993
(73) Patentinhaber: Dynamit Nobel Aktiengesellschaft, 53839 Troisdorf (DE)
(72) Erfinder: Kamm, Artur, W-8830 Treuchtlingen (DE)

(56) Entgegenhaltungen:
- EP-A- 0 151 405
- DE-A- 3 240 492
- FR-A- 2 454 948
- US-A- 4 772 061
- PATENT ABSTRACTS OF JAPAN vol. 11, no. 64 (M-565)(2511) 26. Februar 1987 & JP-A-61 220 977 (KINUGAWA RUBBER IND CO LTD) 1. Oktober 1986

## Beschreibung

Die Erfindung betrifft ein Befestigungssystem für sichtbare Anbauteile bei Fahrzeugen, insbesondere Kraftfahrzeugen, entsprechend dem Oberbegriff des Anspruchs 1 (siehe DE-A-3 240 492).

Sichtbare Anbauteile bei Fahrzeugen, insbesondere Kraftfahrzeugen, sind beispielsweise Seitenbeplankungen und Spoiler, die aus thermoplastischem Kunststoff hergestellt sind. Die Spoiler weisen dabei ein an der Wandung des Fahrzeugs befestigbares Halteteil auf, das zuvor mit dem sichtbaren Anbauteil verbunden ist, indem das Halteteil in das als Außenschale ausgeführte Anbauteil eingeklippst oder eingeklebt ist. Das Halteteil selbst ist dazu mit Befestigungsschrauben versehen, die durch in der Wandung des Fahrzeugs befindliche Bohrungen hindurchgeführt werden und von der Innenseite der Wandung her durch Aufschrauben einer Mutter fixiert werden. Diese Ausführung ist bezüglich der Verbindung der Einzelteile relativ aufwendig. Die Montage am Fahrzeug bedingt dabei oftmals ein Arbeiten über Kopf. Weiterhin kann es zwischen den Einzelteilen durch Relativverschiebungen zueinander zu Geräuschbildungen kommen. Verstärkungen in der Außenschale können Markierungen an der Sichtseite des Anbauteils bedingen. Der vormontierte Spoiler wird als Einheit am Fahrzeug befestigt, wobei je Befestigungspunkt noch zusätzliche Abdichtungen erforderlich sind. Insbesondere im Hinblick auf die geforderte Festigkeit und Steifigkeit sind dafür vergleichsweise teure Werkstoffe erforderlich.

Der Erfindung liegt die Aufgabe zugrunde, ein Befestigungssystem für sichtbare Anbauteile entsprechend dem Oberbegriff des Anspruchs 1 so auszubilden, daß das Anbauteil nebst Halteteil einerseits möglichst wirtschaftlich herstell- und montierbar ist, andererseits den Anforderungen bezüglich Festigkeit, Temperaturverhalten, optischem Eindruck usw. einwandfrei genügt.

Diese Aufgabe wird durch die Ausbildung entsprechend dem Kennzeichen des Anspruchs 1 gelöst. Danach ist es in vorteilhafter Weise möglich, zunächst das separate Halteteil an der Wandung des Fahrzeuges zu befestigen, wobei die Befestigungen überprüfbar und auch leicht wieder lösbar sind, wenn Schrauben für die Befestigung verwendet werden. Nach der Montage des Halteteils am Fahrzeug wird das Anbauteil auf das Halteteil aufgeschoben, so daß es dieses überdeckt. Das als Außenschale ausgeführte Anbauteil wird mit dem Halteteil lösbar, vorzugsweise durch Verschrauben verbunden, so daß auch hier wiederum eine sichere Überprüfung der Verbindung und ggf. eine einfache Demontage nur der Außenschale möglich ist. Die Stützeinrichtungen für die Aussteifung der an sich labilen Außenschale sind an dem Halteteil und nicht in der Außenschale ausgebildet, so daß dieses an seiner äußeren Sichtseite in jedem Falle frei von Markierungen ist.
Die Stützeinrichtungen für die Außenschale sind als wand-, segmentförmige od. dgl. Stützrippen ausgebildet, die im Abstand voneinander angeordnet und einstückig mit dem Halteteil ausgebildet sind.

Die im Anspruch 2 angegebenen Vorsprünge für die Zentrierung der Außenschale sind vorzugsweise hohl und konisch ausgeführt. Die Aufnahmen in der Außenschale sind hülsen-, taschen-, kastenförmig od. dgl. ausgebildet. Bevorzugt wird dabei eine Wandung der Aufnahmen von einer der Flächen der Außenschale selbst gebildet. Gemäß Anspruch 3 ist vorgesehen, die Aufsteck- bzw. Zentrierdome des Halteteils und die zugeordneten taschenförmigen Aufnahmen der Außenschale in ihren Querschnittsabmessungen so festzulegen, daß bei einer längsgestreckten Außenschale diese gegenüber dem Halteteil nur in einem vorgegebenen Bereich in vertikaler und horizontaler Richtung fixiert ist, während sie in den übrigen Abschnitten zwar in vertikaler Richtung fixiert ist, sich jedoch in horizontaler Richtung gegenüber dem Halteteil verschieben kann. Der Fixierpunkt bzw. -punkte werden dabei so festgelegt, daß den Forderungen hinsichtlich Toleranzausgleich und Wärmedehnung (Verwerfungen) Rechnung getragen wird. Bei der Seitenbeplankung eines Fahrzeuges wird man dabei die Fixierung vorzugsweise im Bereich eines Endes vornehmen, um z.B. im Bereich der Türscharniere vorgegebene Spalte einhalten zu können. Bei einem Spoiler erfolgt dagegen die Fixierung vorzugsweise im mittleren Bereich.

Um bei Relativbewegungen der Außenschale gegenüber dem Halteteil unerwünschte Geräusche zu vermeiden, ist gemäß Anspruch 4 zwischen den Stützrippen und der Innenwandung der Außenschale ein spaltförmiger Zwischenraum geringer Breite, beispielsweise von 1 mm, vorgesehen. Drückt man dann z.B. bei einem Spoiler etwa beim Anschieben des Fahrzeuges von Hand gegen die Außenschale, so legt sich die Außenschale nach geringem Eindrücken an die Stützwände an und ist dann einwandfrei abgestützt, so daß die geforderte Festigkeit gegeben ist.

Die Ausbildung gemäß Anspruch 5 gewährleistet in vorteilhafter Weise eine noch höhere Festigkeit der Einheit "Halteteil, Zentriereinrichtungen und/oder Stützeinrichtungen".

Die Ausbildung gemäß Anspruch 6 ermöglicht es z.B. bei einem Heckspoiler, den Schlauch für Waschdüsen zur Scheibenreinigung, Kabelführungen für zusätzliche Bremsleuchten od. dgl. durch das Innere des montierten Spoilers verdeckt hindurchzuführen. Weiterhin wird damit im Reparaturfalle der Aufwand erheblich verringert, da die Außenschale einfach demontierbar ist, so daß die Versorgungs-, Informationsleitungen od. dgl. einfach zugänglich sind.

Das erfindungsgemäße Befestigungssystem zeichnet sich also insbesondere dadurch aus, daß das separate Halteteil, auch "Halter" genannt, sofort nach der Herstellung z.B. mittels einer Spritzgußmaschine montagefertig ist. Die gesamte versteifende Verrippung befindet sich an dem Halteteil, so daß in den Sichtbereichen der Außenschale keine Oberflächenstörungen auftreten. An dem Fahrzeug sind keine zusätzlichen Bohrungen und dementsprechend auch keine zusätzlichen Abdichtungen erforderlich, da die Befestigungselemente nicht an dem Halteteil, sondern fest an der Wandung des Fahrzeugs angeordnet sind. Durch die zunächst erfolgende separate Befestigung des Halteteils am Fahrzeug wird die Fertigung vereinfacht. Eine Überkopfmontage ist nicht mehr erforderlich. Im Hinblick auf die Funktionstrennung zwischen Halteteil und Außenschale sowie die Vermeidung von Schweiß- oder Klebevorgängen zur Verbindung von beiden Teilen ist der Einsatz wirtschaftlicher Werkstoffe möglich. So wird die Außenschale bevorzugt aus Polypropylen hergestellt. Grundsätzlich sind aber auch alle anderen gängigen Thermoplaste und ggf. auch Duroplaste verwendbar. Das Halteteil wird im Hinblick auf die geforderte Steifigkeit vorzugsweise aus glasfaserverstärktem ABS-Kunststoff hergestellt. Je nach den Anforderungen im Einzelfall kann ggf. aber z.B. auch glasfaserverstärktes Polypropylen verwendet werden. Das Befestigungssystem ist weiterhin sehr toleranzfreundich, da alle Fügebereiche überdeckt sind und damit keine optischen Störungen im Gesamterscheinungsbild auftreten.

Die Erfindung ist in der Zeichnung in einem Ausführungsbeispiel gezeigt und wird anhand dieses nachstehend noch näher erläutert. Es zeigen
- Fig. 1: eine perspektivische Darstellung eines Heckspoilers,
- Fig. 2: den Schnitt A - A gemäß Fig. 1,
- Fig. 2a und b: Einzelheiten zu Fig. 2,
- Fig. 3: den Schnitt B - B gemäß Fig. 1 und
- Fig. 4: den Schnitt C - C gemäß Fig. 1.

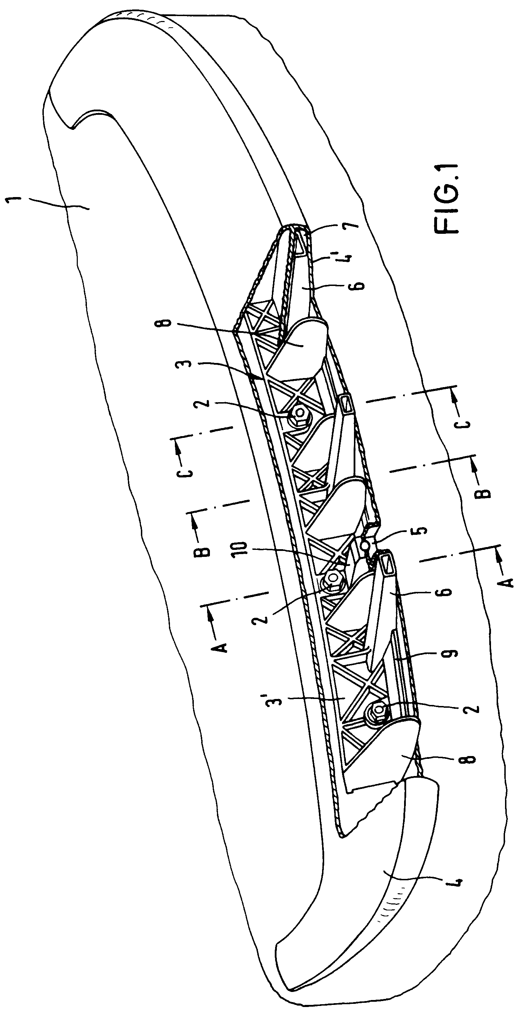

In Fig. 1 ist ein Ausschnitt aus der Wandung 1 des Hecks eines Kraftfahrzeuges gezeigt, an der mittels der Befestigungselemente 2 das längsgestreckte Halteteil 3 befestigt ist. Auf das Halteteil 3 ist das sichtbare Anbauteil, die längsgestreckte Außenschale 4 des Spoilers aufgeschoben. Die Außenschale 4 ist zum Teil aufgebrochen dargestellt, so daß man deutlich deren Ausführung mit einem konkaven Querschnitt und das von ihr überdeckte Halteteil 3 wenigstens zum Teil erkennt. Das Halteteil 3 und die Außenschale 4 sind im Bereich der Ausformungen 5 der Außenschale 4 miteinander verbunden, von denen hier nur eine gezeigt ist. Ihre Anzahl richtet sich nach der Länge des längsgestreckten Halteteils 3 bzw. der Außenschale 4. Bei einer Länge der Außenschale 4 von etwa 1 m genügen zwei derartige Verbindungspunkte mit Ausformungen 5. Das Halteteil 3 weist die im Abstand voneinander angeordneten Zentriereinrichtungen 6 auf, die einstückig mit ihm ausgebildet sind. Sie haben hier die Form von Aufsteckdomen mit einem hohlen Querschnitt und sind zu ihrem freien Ende hin konisch zulaufend ausgebildet. Die Außenschale 4 ihrerseits weist die taschenförmigen Aufnahmen 7 auf, mit denen die Außenschale 4 auf die Aufsteckdome 6 aufgeschoben ist, wie es im rechten Bereich der Fig. 1 zu erkennen ist. Die taschenförmigen Aufnahmen 7 weisen dazu einen Innenquerschnitt auf, der mit dem Außenquerschnitt der Aufsteckdome 6 korrespondiert. Die Aufnahme 7 ist direkt an die untere Wand 4' der Außenschale 4 angeformt.

Das Halteteil 3 weist weiterhin die diskret, d.h. im Abstand voneinander angeordneten Stützeinrichtungen 8 für die Außenschale 4 auf, die hier als wandförmige Stützrippen ausgebildet sind. Weiterhin ist an den Grundkörper 3' des Halteteils 3, der an der hier gewölbten Wandung 1 des Fahrzeuges anliegt, der stegförmige Ansatz 9 angeformt. Sowohl die Zentriereinrichtungen 6 als auch die Stützwände 8 sind mit dem Grundkörper 3' und dem Ansatz 9 des Halteteils 3 einstückig verbunden.

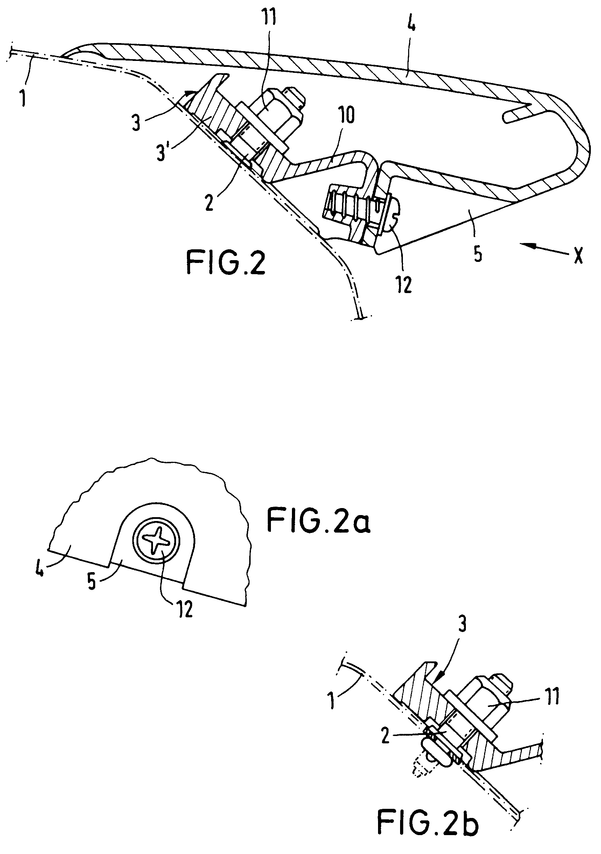

In Fig. 2 ist ein Querschnitt entsprechend der Linie A - A in Fig. gezeigt. Dieser Schnitt ist durch eine Verbindungsstelle des Halteteils 3 und der Außenschale 4 geführt. Strichpunktiert angedeutet ist die Wandung 1 des Fahrzeuges, an welcher das Befestigungselement 2 fest angebracht ist. Im vorliegenden Falle ist es als Schweißbolzen ausgeführt. Das Halteteil 3 ist mit seinem an der Wandung 1 des Fahrzeuges anliegenden Grundkörper 3' und dem an diesem angeformten Befestigungsanschlag 10 zu erkennen. Dieser Befestigungsanschlag 10 korrespondiert mit der Ausformung 5 in der hier im Querschnitt gezeigten Außenschale 4. Der Befestigungsansatz 10 ist auch in der Fig. 1 dargestellt. Das Halteteil 3 ist auf das Befestigungselement 2 aufgesteckt und mittels der Kunststoffmutter 11 fest, aber wieder lösbar mit der Wandung 1 des Fahrzeuges verbunden. Die Außenschale 4, d.h. der eigentliche Spoiler, ist nach der Montage des separaten Halteteils 3 an der Wandung 1 mit dem Halteteil 3 im Bereich der Ausformungen 5 mittels der selbstschneidenden Schraube 12 fest, aber wieder lösbar, verbunden. Zur Vereinfachung der zeichnerischen Darstellung ist die hinter dem Schnitt A - A befindliche nächste Stützwand 8 nicht gezeigt.

In Fig. 2a ist eine Teilansicht entsprechend dem Pfeil X in Fig. 2 gezeigt. Sie zeigt die Ausformung 5 in der Außenschale 4 sowie die darin angeordnete Verbindungsschraube 12.

Fig. 2b zeigt eine Variante zu Fig. 2, bei welcher das Befestigungselement 2 als Blindnietgewindebolzen, der fest und dicht mit der Wand 1 verbunden ist, ausgeführt ist. Im übrigen entspricht die Anordnung der nach Fig. 2.

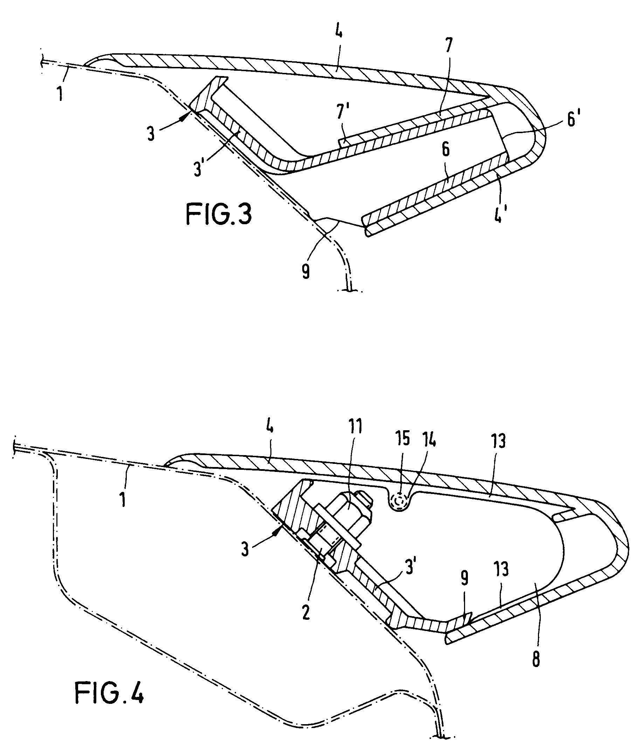

Fig. 3 zeigt einen Querschnitt durch das Befestigungssystem gemäß der Linie B - B in Fig. 1, d.h. im Bereich einer der Zentriereinrichtungen 6 des Halteteils 3. Das Halteteil 3 liegt mit seinem Grundkörper 3' an der strichpunktiert angedeuteten Wand 1 des Fahrzeuges dicht an. Auch hier ist zur Vereinfachung der zeichnerischen Darstellung die hinter der Zentriereinrichtung 6 an sich sichtbare nächste Stützeinrichtung 8 nicht gezeigt. Die Zentriereinrichtung ist einstückig mit dem Grundkörper 3' und dem Ansatz 9 des Halteteils 3 ausgebildet und hat hier die Form eines zapfenförmigen Vorsprungs, der hohl ausgebildet ist und sich gegen sein freies Ende 6' hin konisch verjüngt. Die Außenschale 4 ihrerseits weist die taschenförmige Aufnahme 7 auf, deren lichter Querschnitt entsprechend der Außenfläche der Zentriereinrichtung 6 ausgebildet ist. Ihr lichter Querschnitt erweitert sich dementsprechend zu ihrem freien Ende 7' hin, so daß die Außenschale 4 mit der Aufnahme 7 mit Schiebesitz auf die Zentriereinrichtung 6 aufschiebbar ist. Wie gezeigt, ist damit die Außenschale 4 in vertikaler Richtung fixiert. Sofern in horizontaler Richtung, d.h. senkrecht zur Zeichenebene keine Fixierung gewünscht ist, ist in dieser Richtung die Aufnahme 7 mit einem lichten Querschnitt zu versehen, der entsprechend der gewollten Verschiebbarkeit größer als die äußere Abmessung der Zentriereinrichtung 6 in dieser Richtung ist. Die "untere" Wandung der taschenförmigen Aufnahme 7 wird hier von der Unterseite 4' der Außenschale 4 gebildet, wodurch z.B. eine Festigkeitserhöhung erreicht wird.

In Fig. 4 ist schließlich noch der Schnitt durch das Befestigungssystem für den Spoiler entsprechend der Linie C - C in Fig. 1 gezeigt. Das Halteteil 3 ist wiederum an der Wandung 1 mit dem Befestigungselement 2, einem Schweißbolzen, und Mutter 11 mit seinem Grundkörper 3' an der Wandung 1 anliegend befestigt. Einstückig an den Grundkörper 3' angeformt ist der stegförmige Ansatz 9. In der Ansicht gezeigt ist hier die nächste Stützwand 8, zwischen deren freiem Rand und der Innenwandung der Außenschale 4 der Spalt 13 geringer Breite ausgebildet ist. Weiterhin ist hier die Stützrippe 8 an ihrem oberen Rand mit einer Ausnehmung 14 versehen, durch welche die gestrichelt angedeutete Versorgungsleitung 15 z.B. für eine Waschdüse hindurchgeführt ist. Diese Ausnehmungen 14 sind zur Vereinfachung der zeichnerischen Darstellung in Fig. 1 nicht gezeigt.

## Patentansprüche

1. Befestigungssystem für sichtbare Anbauteile bei Fahrzeugen, insbesondere Kraftfahrzeugen, mit wenigstens einem an einer Wandung des Fahrzeugs mittels eines Befestigungselementes fixierbaren Halteteil (3) und einem mit letzterem verbindbaren Anbauteil, wobei das Anbauteil eine Außenschale (4) mit einem konkaven Querschnitt ist, die auf das Halteteil (3) aufschieb-, aufsteckbar oder dgl. ist, und zwischen dem Halteteil (3) und der Außenschale (4) Zentrier- und Stützeinrichtungen vorgesehen sind, **dadurch gekennzeichnet**, daß an der Wandung (1) des Fahrzeugs stift-, bolzenförmige oder dgl. Befestigungslemente (2) fest anordbar sind, auf diese Befestigungselemente (2) das Halteteil (3) aufschieb-, aufsteckbar oder dgl. und mit der Wandung (1) fest verbindbar ist, das Halteteil (3) auf seiner von der Wandung (1) abgewandten Fläche im Abstand von einander angeordnete Zentriereinrichtungen (6) sowie Stützeinrichtungen (8) aufweist, die als von der Fläche des Halteteils (3) zumindest im wesentlichen senkrecht abstehende wand-, segmentförmige oder dgl. Stützrippen ausgebildet sind, die über das längsgestreckte Halteteil (3) verteilt angeordnet sind und in das Innere der mit dem Halteteil (3) verbundenen konkaven Außenschale (4) hineinragen, wobei die Zentrier- (6) und Stützeinrichtungen (8) des Halteteils (3) bezüglich der Außenschale (4) derart angeordnet und bemessen sind, daß die Außenschale (4) einwandfrei am Halteteil anord- und abstützbar ist.

2. Befestigungssystem nach Anspruch 1, **dadurch gekennzeichnet**, daß die Zentriereinrichtungen (6) als zapfen-, domförmige od. dgl. Vorsprünge am Halteteil (3) ausgebildet sind, auf welche die Außenschale (4) mit innenseitig angeordneten korrespondierenden Aufnahmen (7) aufschieb-, aufsteckbar od. dgl. ist.

3. Befestigungssystem nach Anspruch 2, **dadurch gekennzeichnet**, daß das Halteteil (3) laschen-, schienenförmig od. dgl. und ggf. entsprechend der Wandung (1) des Fahrzeugs gewölbt ausgebildet ist und die Zentriereinrichtungen (6) verteilt, vorzugsweise gleichmäßig, über das längsgestreckte Halteteil (3) angeordnet sind, wobei eine oder ggf. auch zwei Zentriereinrichtungen (6) eine Fixierung der längsgestreckten Außenschale (4) in Richtung der Längserstreckung des Halteteils (3) und senkrecht dazu und die übrigen Zentriereinrichtungen (6) nur eine Fixierung senkrecht zur Längserstreckung des Halteteils (3) bewirken.

4. Befestigungssystem nach einem der Ansprüche 1 bis 3, **dadurch gekennzeichnet**, daß zwischen dem freien Rand der Stützrippen (8) und der Innenfläche der Außenschale (4) ein freier Spalt (13) geringer Breite vorgesehen ist.

5. Befestigungssystem nach einem der Ansprüche 1 bis 4, **dadurch gekennzeichnet**, daß das Halteteil (3) einen winkelförmigen Querschnitt aufweist, indem sein längsgestreckter an der Wandung (1) des Fahrzeugs zu befestigender Grundkörper (3') an seinem einen Längsrand mit einem steg-, streifen-, flanschförmigen od. dgl. Ansatz (9) versehen ist, der sich unter einem vorgegebenen Winkel geneigt zum Grundkörper (3') erstreckt, und daß die Zentrier- (6) und/oder die Stützeinrichtungen (8) einstückig sowohl an dem Grundkörper (3') als auch an dem Ansatz (9) angeformt sind.

6. Befestigungssystem nach einem der Ansprüche 1 bis 5, **dadurch gekennzeichnet**, daß die Stützrippen (8) Ausnehmungen (14) aufweisen, durch welche innerhalb der Baueinheit Halteteil (3) /Außenschale (4) Versorgungs-, Informationsleitungen od. dgl. (15) verdeckt in Längsrichtung hindurchführbar sind.

## Claims

1. A system for securing visible components to vehicles, in particular motor vehicles, with at least one retaining element (3) which can be secured to a wall of the vehicle by means of a securing element, and a component which can be connected to the retaining element (3), the component being an outer shell (4) having a concave cross section, which can be pushed, fitted or the like onto the retaining element (3), and centring and support devices being provided between the retaining element (3) and the outer shell (4), characterised in that pin-shaped, bolt-shaped or similarly shaped securing elements (2) can be securely fitted to the wall (1) of the vehicle, the retaining element (3) can be pushed, fitted or the like onto said securing elements (2) and securely connected to the wall (1) on the surface of the retaining element remote from the wall (1), the retaining element (3) comprises centring devices (6) spaced apart from one another and support devices (8) which are constructed as wall-shaped, segment-shaped or similarly shaped support ribs projecting at least substantially perpendicularly from the surface of the retaining element (3), which are arranged distributed over the elongate retaining element (3) and which project into the interior of the concave outer shell (4) connected to the retaining element (3), the centring devices (6) and support devices (8) of the retaining element (3) being arranged and dimensioned relative to the outer shell (4) in such a manner that the outer shell (4) can be efficiently arranged and supported on the retaining element.

2. A securing system according to claim 1, characterised in that the centring devices (6) are constructed on the retaining element (3) as journal-shaped, dome-shaped or similarly shaped projections, onto which the outer shell (4) can be pushed, fitted or the like with inwardly arranged matching mountings (7).

3. A securing system according to claim 2, characterised in that the retaining element (3) is tongue-shaped, rail-shaped or the like and is optionally curved to match the wall (1) of the vehicle, and the centring devices (6) are arranged preferably uniformly distributed over the elongate retaining element (3), one or optionally two centring devices (6) effecting a securing of the elongate outer shell (4) in the direction in which the retaining element (3) extends longitudinally and perpendicular thereto and the other centring devices (6) only effecting securing perpendicular to the direction in which the retaining element (3) extends longitudinally.

4. A securing system according to claims 1 to 3, characterised in that a clear gap (13) of small width is provided between the free edge of the support ribs (8) and the inner surface of the outer shell (4).

5. A securing system according to one of claims 1 to 4, characterised in that the retaining element (3) has an angular cross section by having its elongate base element (3') which is to be secured to the wall (1) of the vehicle provided on one longitudinal edge with a web-, strip-, flange- or similarly shaped attachment (9), which extends inclined at a given angle to the base element (3'), and the centring devices (6) and/or support devices (8) are integrally formed both with the base element (3') and with the attachment (9).

6. A securing system according to one of claims 1 to 5, characterised in that the support ribs (8) comprise recesses (14), through which supply lines, information lines or the like (15) can be guided in the longitudinal direction in concealed fashion within the retaining element (3)/outer shell (4) unit.

## Revendications

1. Système de fixation pour des éléments rapportés apparents sur des véhicules, notamment sur des véhicules automobiles, comportant au moins une partie-support (3) qui se fixe sur une paroi du véhicule au moyen d'un élément de fixation et une partie rapportée qui peut être liée à ladite partie-support, la partie rapportée étant une coque extérieure (4) à section transversale concave qui peut être enfilée emmanchée ou autre sur la partie-support (3) et des dispositifs de centrage et d'appui étant prévus entre la partie-support (3) et la coque (4) extérieure, caractérisé par le fait que des éléments de fixations (2) en forme de tige, de vis ou autre sont montés fixes sur la paroi (1) du véhicule, que la partie-support (3) peut être enfilée, emmanchée ou autre sur lesdits éléments de fixation (2) et liée rigidement à la paroi (1), que la partie-support (3) présente, sur sa face éloignée de la paroi (1), à distance les uns des autres, des dispositifs de centrage (6) et des dispositifs d'appui (8) qui sont agencés sous forme de cloisons d'appui en forme de paroi, de segment ou autre qui font saillie au moins sensiblement perpendiculairement sur la surface de la partie-support (3), sont répartis sur la partie-support (3) allongée et pénètrent à l'intérieur de la coque (4) extérieure concave liée à la partie-support (3), les dispositifs de centrage (6) et d'appui (8) de la partie-support (3) étant disposés et dimensionnés par rapport à la coque (4) extérieure de manière telle que ladite coque (4) extérieure soit parfaitement positionnée et prenne parfaitement appui sur la partie-support.

2. Système de fixation selon la revendication 1, caractérisé par le fait que les dispositifs de centrage (6) sont agencés sous forme de saillies en forme de téton, de dôme ou autre sur la partie-support (3) sur lesquelles la coque (4) extérieure peut être enfilée, emmanchée ou autre grâce à des parties réceptrices (7) disposées en conséquence côté intérieur.

3. Système de fixation selon la revendication 2, caractérisé par le fait que la partie-support (3) est agencée sous forme de patte, de rail ou autre avec une courbure adaptée à la paroi (1) du véhicule et que les dispositifs de centrage (6) sont répartis de préférence de manière régulière sur la partie-support (3) allongé, un ou éventuellement deux dispositifs de centrage (6) assurant le positionnement de la coque (4) extérieure allongée dans direction longitudinale de la partie-support (3) et perpendiculairement à celle-ci et les autres dispositifs de centrage (6) assurant le positionnement uniquement dans la direction normale à la longueur de la partie-support (3).

4. Système de fixation selon les revendications 1 à 3, caractérisé par le fait qu'il est prévu entre le bord libre des cloisons d'appui (8) et surface intérieure de la coque (4) extérieure un espace (13) libre de faible largeur.

5. Système de fixation selon l'une des revendications 1 à 4, caractérisé par le fait que la partie-support (3) a une section transversale anguleuse, sa base (3') allongée destinée à être fixée sur la paroi (1) du véhicule étant pourvue sur l'un de ses bords longitudinaux d'un rebord (9) en forme de barrette, de bande, de joue ou autre qui est incliné suivant un angle prédéterminé en direction de ladite base (3') et par le fait que les dispositifs de centrage (6) et/ou d'appui (8) font corps avec la base (3') et avec le rebord (9).

6. Système de fixation selon l'une des revendications 1 à 5, caractérisé par le fait que les cloisons d'appui (8) présentent des évidements (14) dans lesquels des câbles d'alimentation, d'information ou autre passent dans la direction longitudinale en étant masqués à l'intérieur de l'ensemble partie-support (3)/coque extérieure (4).
